# EUROPEAN PATENT APPLICATION

(11) **EP 2 159 192 A1**
(43) Date of publication of application: **03.03.2010**
(21) Application number: 08015165.7
(22) Date of filing: 28.08.2008
(51) Int. Cl.: C01B 3/02, C01B 3/50

(54) **Process for the production of ammonia synthesis gas with improved cryogenic purification**

(71) Applicant: Ammonia Casale S.A., 6900 Lugano (CH)
(72) Inventor: Filippi, Ermanno, 6976 Castagnola (CH); Skinner, Geoffrey Frederick, Reading Berkshire RG2 7AS (GB)
(74) Representative: Zardi, Marco

(57) **Abstract**

A process and related equipment for producing ammonia synthesis gas are disclosed, wherein a raw syngas (13) is purified in a cryogenic section (CS) and a nitrogen-rich liquid stream (30) is separated from the raw syngas flow during purification and HN ratio adjustment, and wherein the pressure of said liquid stream (30) is reduced in a turbine (60) to enhance net refrigerative effect for the cryogenic section. Embodiments wherein chilling is also provided by a low-pressure or high-pressure syngas expander are also disclosed.

## Description

### Field of application

The present invention refers to a process and apparatus for producing a synthesis gas mainly consisting of hydrogen and nitrogen, suitable for the synthesis of ammonia. More in detail, the invention relates to a process and apparatus wherein raw synthesis gas from reforming of a hydrocarbon is subject to cryogenic conditioning to obtain said synthesis gas.

### Prior art

Ammonia synthesis gas is required to contain H₂ and N₂ in a molar ratio (HN ratio) around 3:1, with impurities as low as possible. It is prior art to obtain such syngas by reforming of a hydrocarbon feedstock, usually by natural gas steam-reforming, and/or partial oxidation with air, in the front-end of an ammonia synthesis plant.

A common prior-art process comprises reforming in a first (primary) steam reformer and then in a secondary reformer working with air. An excess of nitrogen, with reference to the quantity of nitrogen needed for ammonia synthesis downstream, is introduced with the air entering the secondary reformer, obtaining a raw syngas containing H₂, N₂ in excess, plus a certain amount of CH₄, CO, CO₂, Ar and H₂O.

Said raw syngas, after conventional CO shift, removal of CO₂ and methanation processing steps, and a further treatment to completely remove H2O and CO2, usually performed with molecular sieves, needs purification and adjustment of the HN ratio. This is accomplished in a suitable cryogenic section, advantageously comprising a dephlegmator, or an assembly comprising a cooling column and a reflow condenser, or the purifier known as Braun Purifier™, or similar known equipments. The purification and HN adjustment, in essential terms, removes the nitrogen in excess, to the extent required to balance the HN ratio around the 3:1 value for ammonia synthesis and also significantly removes Ar and CH₄. The purified syngas, then, is fed to a main compressor, raising the pressure to a value suitable for use in ammonia synthesis process, usually 100 - 200 bar.

A conventional cryogenic purification process is disclosed in US 3,572,046. The cryogenic purifier consists of two feed effluent heat exchangers, a gas expander such as a turbine, a rectifier column and a reflux condenser; the process involves auto-refrigeration and expansion of the raw syngas in said gas expander, to provide the net refrigeration of the cryogenic section and to keep the whole cryogenic process in heat balance. The auto-refrigeration, i.e. the raw syngas being cooled by the re-heating purified syngas, needs some extra refrigeration or net refrigeration to balance the overall heat exchange; this net refrigeration is given by the aforesaid expansion of the raw syngas.

Still according to the known art, a nitrogen-rich liquid stream is taken at the bottom of the column and throttled to a reduced pressure, through a condensate let-down valve; the resulting vapour/gas mixture is then used to cool the reflux condenser.

This known process is widely used but it is not completely satisfactory. Gas work expansion of the main inlet methanated gas stream, in a turbine or other suitable device, is indispensable to keep the cryogenic process running; however, it involves the drawback of a lower pressure of the syngas, increasing the size and cost of the main syngas compressor downstream. Further to this drawback, there is the need to improve the global efficiency of the above process, also with a view to the revamping or retrofitting of existing ammonia plants.

### Summary of the invention

The invention is aimed at improving the energy efficiency of the known process of cryogenic purification of raw syngas for the synthesis of ammonia, in the front-end of an ammonia plant, as above described.

This problem is solved by a process for producing a synthesis gas containing hydrogen and nitrogen, suitable for production of ammonia, comprising the following steps:
a) a raw syngas stream containing H₂, N₂ and impurities is obtained from reforming of a hydrocarbon feedstock;
b) said raw syngas stream is cooled to cryogenic temperature in a cryogenic section and subject to a purification and HN ratio adjustement process, so obtaining a purified syngas flow comprising H₂ and N₂ in a molar ratio about 3:1, and separating a nitrogen-rich liquid stream from said raw syngas;
c) said purified syngas flow is reheated by heat exchange with the cooling raw gas flow and made available at a pressure suitable for ammonia synthesis,
**characterized in that** said nitrogen-rich liquid stream is subject to pressure reduction in a liquid expander recovering a mechanical work from said pressure reduction , and the stream resulting from said pressure reduction is used as a heat exchange medium to provide at least part of net refrigeration of said cryogenic section.

The reforming is usually carried out with steam in a primary reformer and with air in a secondary reformer, with further steps of shift, CO₂ removal, methanation and total removal of H2O and CO2. Said hydrocarbon is usually a natural gas.

The purified syngas is made available at the required pressure for ammonia synthesis usually by compression in a suitable compression section. However, the compression of the purified syngas may not be necessary with a high-pressure front-end operating at around 70-80 bar and, preferably, with appropriate high-activity catalyst such as Ruthenium-based catalyst.

The term cryogenic temperature is used with reference to a temperature around the dew point of the raw syngas, usually well below -100 °C and typically around -170 °C (170 degrees below zero).

The term liquid expander is used with reference to any device adapted to subject the input liquid stream to pressure reduction from a given inlet pressure to a lower outlet pressure, subjecting also the input stream to an enthalpy drop and recovering a corresponding amount of mechanical work. The liquid expander according to the invention comprises appropriate moving parts, such as a rotor, a piston or the like, operated by the expansion of the nitrogen-rich stream and adapted to convert the enthalpy drop into a mechanical work.

Preferably, said liquid expander is a turbine. The expander is typically a turbine but other devices may be used. An example of another device is a positive displacement device such a reversed screw compressor. A positive displacement device may be used especially in small-scale plants using the invention. Partial or total evaporation of the N₂-rich liquid stream may take place during the expansion of the same, across said liquid expander.

It should be noted that the thermodynamic fluid transformation carried out by said liquid expander is much closer to the ideal reversible (isentropic) transformation than the highly irreversible pressure letdown (or lamination) through the prior-art letdown valve. As a consequence, the delta-temperature typically is greater, meaning that the temperature (and also the vapour fraction) of the stream at the outlet of the liquid expander is lower than temperature of the output stream of the prior-art letdown valve, at the same inlet conditions. The refrigerative effect is consequently greater and, in a surprising way, the gas expander can be much reduced in power production, or even eliminated, as the expansion of the liquid stream may be nearly or totally sufficient for net refrigeration of the whole cryo section.

In fact, it has been found that, depending on the particular application, the chilling produced by the liquid expander may be sufficient to provide the required net refrigeration and to keep the whole cryogenic process in heat balance; in this event no gas expander is necessary and the arrangement is much less complex.

According to further aspects of the invention, however, a portion of purified syngas at cryogenic temperature is subject to expansion in a gas expander, to recover an additional mechanical work and to provide further refrigeration to the cryo section. Said portion of purified syngas is subject to a temperature drop due to expansion itself, and the cooled stream at the outlet of the gas expander, according to this aspect of the invention, is used as a heat exchange medium to provide a part of net refrigeration of the cryogenic section. In other words, net refrigeration to cryo section is given by expansion of both said syngas portion and of the liquid stream. The enhanced refrigerative effect obtained from the nitrogen-rich liquid stream, by adoption of a liquid expander instead of a letdown valve, has the advantage that less syngas must be expanded and recompressed for a given refrigeration capability.

In particular, an embodiment of the invention provides that a portion of purified syngas at cryogenic temperature is separated and subject to expansion in a suitable gas expander, with a further recovery of mechanical work. The expanded stream so obtained is used as a heat exchange medium to provide a part of the net refrigeration for the cryogenic section. Preferably it is then compressed and re-combined with the remaining gas stream at the outlet of the cryogenic section and upstream the main syngas compression section.

In another embodiment, a portion of compressed purified syngas delivered by a main syngas compression section is sent back to the cryo section, cooled down to cryogenic temperature, expanded in a suitable high-pressure gas expander and used as a heat exchange medium to provide a part of the net refrigeration to the cryo section. Preferably, the outlet of said high-pressure gas expander is joined with the "fresh" purified syngas stream and the resulting stream is used as heat exchange medium for refrigeration of the cryo section.

Preferably, a minor portion less than 50% of the purified syngas is sent to the gas expander. The minor portion of the purified syngas sent to the gas expander is preferably about 15-30% in terms of mass flow rate, and the preferred expansion ratio of the gas expander is about 1.5 to 5.0. The portion of compressed syngas sent to said high-pressure gas expander is preferably 10 to 20%. The temperature drop across the gas expander is usually around 8-10 °C.

In a preferred realization, the purification and adjustment process is basically as follows: the raw syngas entering the cryo section is cooled in a main heat exchanger, down to cryogenic temperature, then it is fed to a contacting device such as a wash column or a dephlegmator; vapour from said contacting device is further cooled in a reflux condenser and sent to a separator, where a nitrogen-rich liquid reflux stream and a purified syngas flow are obtained. Said reflux stream is sent back to the wash column, and the nitrogen-rich liquid stream is collected at the bottom of said column.

In accordance with said preferred realization and the above described low-pressure expander embodiment, a portion of purified syngas flow, preferably less than 50%, is sent to the gas expander and passed, in parallel with the rest of the purified syngas, through said reflux condenser and/or main heat exchanger, to provide the required refrigeration. In accordance with the high-pressure expander embodiment, the purified syngas flow from the separator is joined with a syngas stream taken from delivery of the main syngas compressor, cooled in the cryo section and expanded in a suitable gas expander; the resulting flow is fed to refrigerate the reflux condenser and/or main heat exchanger.

According to various embodiments of the invention, the available refrigeration streams are the expanded nitrogen-rich liquid stream and, if provided, the purified syngas portion expanded at low or high pressure. One or more of said refrigeration streams can bypass the reflux condenser, i.e. they can be fed directly to the main heat exchanger of the cryo section.

Preferably the main heat exchanger and reflux condenser are indirect-exchange tube or plate heat exchange units inside the cryogenic section.

An object of the invention is also an apparatus for producing a synthesis gas containing hydrogen and nitrogen, suitable for production of ammonia, the apparatus being adapted to carry out the above process. More in detail, an object of the invention is an apparatus comprising at least:
- a hydrocarbon reforming equipment providing a raw syngas stream containing H₂, N₂ and impurities;
- a cryogenic section for purification and rectification of said raw syngas stream, adapted to convert said raw syngas into a purified syngas stream containing H₂ and N₂ in a molar ratio about 3:1, the cryogenic section comprising at least one heat exchanger for cooling the raw syngas and re-heating the purified syngas;
- optionally, a main compressor disposed to receive said purified syngas stream from the cryogenic section, and adapted to raise the pressure of the purified syngas to a value suitable for ammonia synthesis;
and characterized in that said cryogenic section comprises a liquid expander disposed to receive a nitrogen-rich liquid stream separated from the raw syngas, said liquid expander recovering a mechanical work, the output of said liquid expander being connected to said at least one heat exchanger to provide at least part of net refrigeration of the cryogenic section.

Preferably, the cryogenic section comprises a main heat exchanger cooling the inlet raw syngas, a contacting device such as a washing column, a reflux condenser and a separator delivering a purified syngas stream. The cryo section may further comprises a low-pressure gas expander disposed to expand a portion of said purified syngas stream from the separator, the output of said expander being connected to at least one of said heat exchanger and reflux condenser, to provide a part of the net refrigeration of the cryogenic section. As an alternative, the cryo section may comprise a high-pressure gas expander fed with a portion of syngas taken at the delivery side of the main compressor.

An object of the invention is also the revamping of a conventional ammonia plant, or the front-end thereof, to make it adapted to carry out the inventive process as disclosed above.

In particular, the invention includes the provision of the aforesaid liquid expander for the nitrogen-rich liquid stream in a conventional cryogenic section of the front-end of an ammonia plant, or the substitution of the existing expansion valve with said liquid expander. Optionally, a suitable low-pressure or high-pressure gas expander can also be arranged to make the plant adapted for the embodiments described above.

An object of the invention is also a method for revamping an existing ammonia plant originally designed with no cryogenic section. In this case, the method is characterized by the provision of a cryo section adapted to remove the impurities and correct the HN ratio of the raw syngas in accordance with the invention. Hence, there is provided a method for revamping an existing ammonia plant, said plant comprising a front-end for the production of a raw syngas containing hydrogen and nitrogen plus impurities, the method comprising the addition of a new cryogenic section to said existing ammonia plant for purification and HN ratio adjustment of said raw syngas, said new cryogenic section comprising a liquid expander adapted to recover a mechanical work from a nitrogen-rich liquid stream, separated from the raw syngas in said cryogenic section.

The main advantages of the invention are now discussed.

The pressure reduction of the N₂-rich liquid stream through the liquid expander is much closer to an ideal (reversible) expansion than the expansion through a let-down valve and, hence, the expansion has a greater delta-T for a given pressure drop. Given an inlet temperature and pressure T₁, p₁ and an outlet pressure p₂, expansion of liquid stream from p₁ to p₂ across a turbine (or other liquid expander adapted to recover work) leads to a lower temperature T₂ (and also to a lower vapour fraction) than the lamination across a letdown valve. This is because the highly irreversible expansion through the letdown valve converts the enthalpy drop into internal heat of the fluid itself and - as a consequence - T₂ is higher. The liquid expander or turbine, on the contrary, converts the available enthalpy to work, yielding a lower output temperature T₂. The term delta-T, as clear to the skilled man, is used herein with reference to difference T₁-T₂.

A greater delta-T gives enhanced refrigerative effect obtained from the liquid stream and, hence, improved efficiency of the cryo process. The recovery of mechanical work is clearly another advantage over the prior art, where no work is made available by the letdown valve.

Where the expansion of said liquid stream is sufficient to provide the required net refrigeration, i.e. the gas expander is no longer necessary, a significant advantage in terms of cost and reduced complexity is also achieved by the invention.

The use of a portion of the purified gas as a cooling medium, according to the above low-pressure or high-pressure gas expander embodiments, gives additional refrigeration without expanding the full syngas stream, as in the prior art, and related drawbacks in terms of size and cost of the compressor.

The overall cryo process is surprisingly more efficient, requiring, for the same amount of gas, less energy consumption in the main syngas compressor, and providing bigger differences of temperature across the heat exchange area, meaning smaller and less expensive heat exchangers in relation to actual heat exchanged.

The invention has advantages also in revamping of existing plants operating with a prior-art process. The provision of the liquid expander, and possibly of a gas expander for a portion of purified gas, allows to increase capacity without the need of enlarging items such as expander, compressor and heat exchangers.

Further and specific advantages of the various embodiments of the invention, as well as features thereof, will be clearer with the following detailed description, and with the help of non-limiting examples of the drawings.

### Brief description of the drawings

Fig. 1 is a simplified scheme of an apparatus adapted to carry out the process on the invention, according to a first embodiment where net refrigeration of the cryo section is provided by the nitrogen-rich liquid stream.
Fig. 2 is a scheme of a variant of the equipment of Fig. 1, where a part of net refrigeration is given by expanding a portion of syngas at a low pressure.
Fig. 3 is a scheme of a variant of the equipment of Fig. 1, where a part of net refrigeration is given by expanding a portion of syngas at a high pressure.
Fig. 4 is a scheme of another variant of the invention.

### Detailed description of preferred embodiments

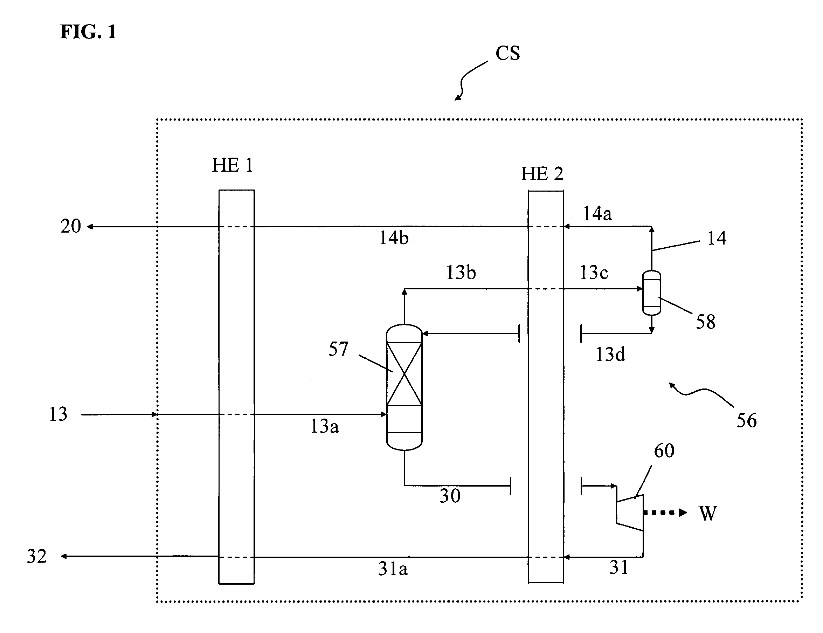

Referring to Fig. 1, in a reforming-based ammonia plant a dry CO₂-free and methanated syngas stream 13 is fed to a cryogenic (cryo) section CS for cryogenic purification and HN ratio adjustment. A purified syngas stream 20, with HN ratio around the 3:1 value required for ammonia synthesis, is obtained at the output of said cryo section CS. Stream 20 is fed to an ammonia synthesis section via a main syngas compressor (not shown).

The raw syngas 13 comprises hydrogen (H₂) and nitrogen (N₂) plus impurities and inerts such as, argon and residual methane. Said raw syngas 13 is obtained by first steam reforming of a hydrocarbon feedstock, such as natural gas, in a primary reformer, and then with air in a secondary reformer, with further process steps of shift, CO₂ removal and methanation, according to well known art. The secondary reformer is operated with some excess of air, so that nitrogen in raw syngas 13 is in excess with respect to the H₂/N₂ 3:1 molar ratio required for synthesis of ammonia. Said N₂ excess of stream 13 is preferably between 10% and 50% and more preferably 15-30% in moles.

Cryo section CS is generally indicated by the dotted boundary line in the figures, and may comprise a plurality of equipments, in accordance with different embodiments of the invention.

Basically, in the cryo section CS the raw syngas 13, after having been dried and CO₂ completely removed, is cooled to a cryogenic temperature, e.g. around - 170 °C, obtaining a stream 13a that is purified to a stream 14 by separation of condensed excess nitrogen plus smaller quantities of condensed methane and argon, forming a nitrogen-rich liquid stream 30. Removal of the CO₂ is important to avoid CO₂ condensation at the low temperatures of the cryo section.

The figures relate to embodiments where main components of the cryo section CS are: a main heat exchanger HE1, a reflux condenser HE2, a contacting device 57 and a liquid/vapour separator 58, forming a purification section 56. The purified syngas stream 14 is obtained at the output of said separator 58. The contacting device 57 in the example is a wash column, although a run-back condenser or "dephlegmator" may be used. The N₂-rich liquid stream 30 is collected at the bottom of column 57.

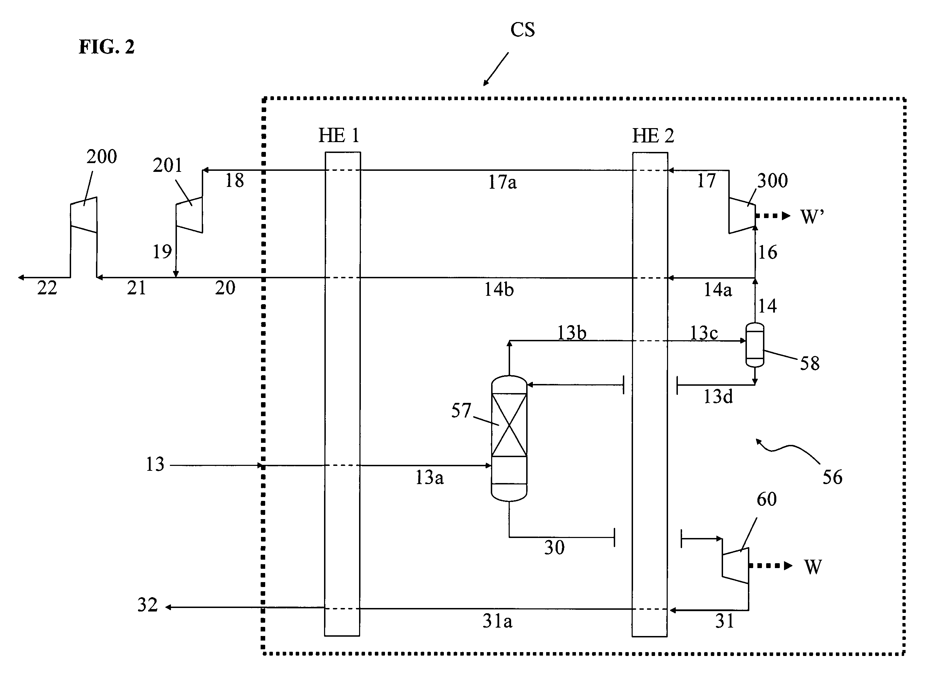

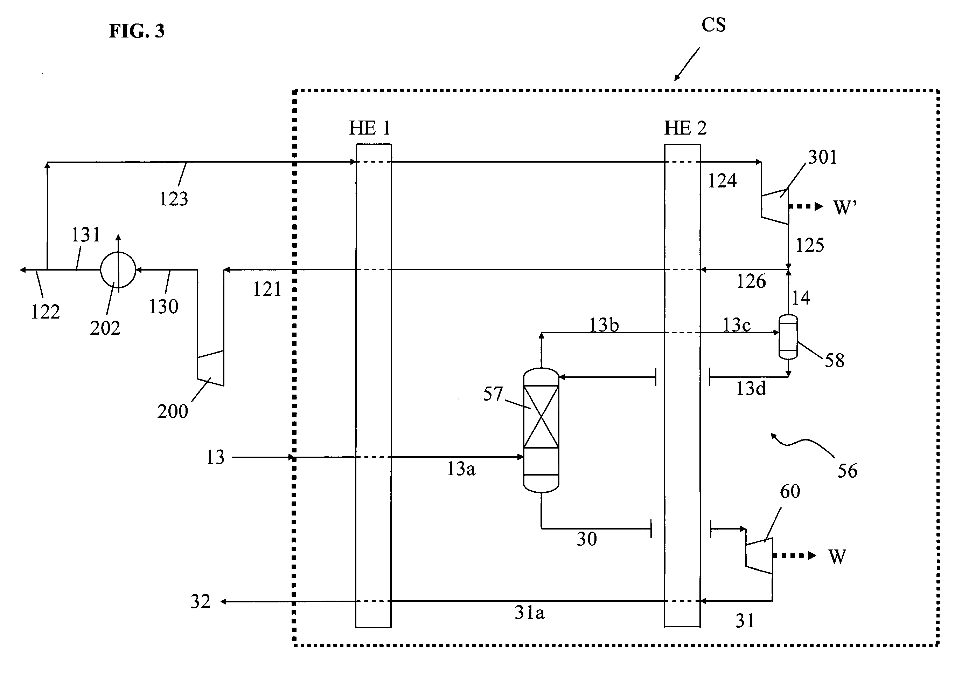

Fig. 1 relates to a first embodiment where net refrigeration of the cryo section is provided entirely by pressure reduction of nitrogen-rich liquid stream 30 separated from the raw syngas 13 and passed through a liquid expander such as a turbine 60. Fig. 2 and 3 relate to embodiments where net refrigeration is also provided by a portion of the purified syngas passed through a low-pressure (LP) gas expander 300 or, respectively, a high-pressure (HP) gas expander 301.

Referring again to Fig. 1, the syngas stream 13 enters the cryogenic section CS typically at a temperature between -30 °C (30 °C below zero) and +40 °C, and is cooled in the main heat exchanger HE1 to or slightly below its dew point, obtaining stream 13a at a very low temperature, e.g. around -170 °C, entering wash column 57. A nitrogen-rich liquid reflux stream 13d is supplied to the top of the column 57 from separator 58. The overhead vapour stream 13b from the column 57 is cooled in reflux condenser HE2 obtaining a cooled stream 13c entering the vapor/liquid separator 58. The liquid leaving the base of separator 58 forms the above-mentioned reflux stream 13d. The temperature of said cooled stream 13c is controlled to a level at which the purified vapour stream 14 has the requisite HN ratio close to 3 for the downstream ammonia synthesis unit. Temperature of stream 13c is usually around -180 °C, but may vary depending on the application.

The purified syngas stream 14 from the separator 58 forms the stream 14a that is heated in reflux condenser HE2 to a temperature just below that of stream 13b. The resulting stream 14b is then further heated in main exchanger HE1 obtaining the stream 20 at a temperature just below the temperature of the raw gas stream 13 from reformers. Typically, the stream 20 has a pressure of between 20 and 80 bar, although lower or higher pressures may be used.

The nitrogen-rich liquid stream 30 leaving the base of the wash column 57 is sent to turbine 60, in which its pressure is reduced typically to below 5 bar, obtaining an expanded stream 31 and recovering a work W.

Said expanded stream 31 is then directed through a passage in reflux condenser HE2, being therein partially evaporated to stream 31a by heating to a temperature just below that of stream 13b. This stream 31 a then passes through the main exchanger HE1, in which it also attains a temperature just below the temperature of the feed stream 13. The output stream 32 containing nitrogen, methane and argon is typically used as plant fuel.

Net refrigeration to HE1 and HE2 is given by the syngas stream 14a heated to stream 20, and by the expanded liquid stream 31 heated and partially evaporated to 32. It should be noted that the temperature drop across turbine 60 compensates for the refrigeration losses and for the delta-T required by the heat exchangers HE1 and HE2 and, hence, keeps the whole cryogenic process in heat balance.

Turning now to Fig. 2, a part of the net refrigeration is provided by expansion of a portion 16 of the purified syngas stream 14. Preferably the portion 16 is a minor portion in terms of mass flow rate, between 15 and 30% of stream 14.

Stream 16 is passed to an expander 300, exiting as stream 17 having a lower pressure and temperature than inlet stream 16. Pressure at the outlet of expander 300 is typically between 15 bar and 20 bar, and temperature drop T₁₆-T₁₇ is typically around 10 °C, due to the expansion itself.

The stream 17 is heated in condenser HE2 obtaining stream 17a to a temperature just below that of stream 13b, thereby completing the heat balance of HE2. Stream 17a is then further heated in the main exchanger HE1 obtaining a stream 18 at a temperature just below the temperature of the feed stream 13, completing the heat balance of main heat exchanger HE1.

The remaining syngas portion 14a, as shown, is also passed through the condenser HE2 and main heat exchanger HE1 obtaining the output stream 20. The expanded and re-heated stream 18 is then fed to the auxiliary compressor 201, recovering the pressure drop of expander 300, and rejoins the output stream 20, forming the stream 21 that is the full syngas available for the downstream ammonia synthesis unit. Stream 21 is fed directly to a main syngas compressor 200, which generates a high-pressure stream 22 at around 100 - 200 bar for the downstream ammonia synthesis unit. The compressor 200 is usually a multi-stage unit.

The gas expander 300 receives the stream 14 at a low pressure, compared to pressure of stream 22. A particular advantage of the LP gas expander arrangement of Fig. 2 is that the stream 17 is re-combined with the rest of the syngas (stream 20) after the purification step and at the outlet of cryo section CS, i.e. at the suction side of main compressor 200. This avoids a dilution of the inlet flow of the same cryo section, and makes the cryogenic separation/purification more effective. Another advantage is that the volumetric flow entering the cryo section is not increased and then the items such as column 57 and separator 58 are smaller and less expensive. In case of a revamping, a greater capacity can be reached without the need to modify or replace the main components of cryo section CS.

Fig. 3 is a further embodiment where a portion 123 of the syngas is expanded at a higher pressure.

Purified syngas 121 at the outlet of the cryo section CS is compressed in the main compressor 200 and output 130 is cooled in heat exchanger 202, obtaining a high-pressure syngas stream 131. A portion 123 of said syngas stream 131 is sent back to the cryo section CS and cooled down to cryogenic temperature in exchanger HE1 and reflux condenser HE2. The resulting stream 124 is then expanded through a suitable HP gas expander 301; the stream 125 at the outlet of said expander 301 is joined with the purified syngas stream 14 from the separator 58, forming a stream 126 which is fed to condenser HE2 and main exchanger HE1, as a refrigerating medium. Preferably, mass flow rate of stream 123 is 10 to 20% of mass flow rate of stream 131.

The gas expander exit stream 125 preferably mixes with stream 14 without any restriction. A preferred flow rate control in the system 123 - 124 - 125 is by adjustment of inlet guide vanes in the expander 300.

An advantage of this HP gas expander embodiment is that the additional compressor for the expanded syngas portion (compressor 201 in Fig. 2) is not required.

Preferably the LP expander 300 (Fig. 2) or the HP expander 301 (Fig. 3) are realized with a turbine, recovering additional mechanical work W'.

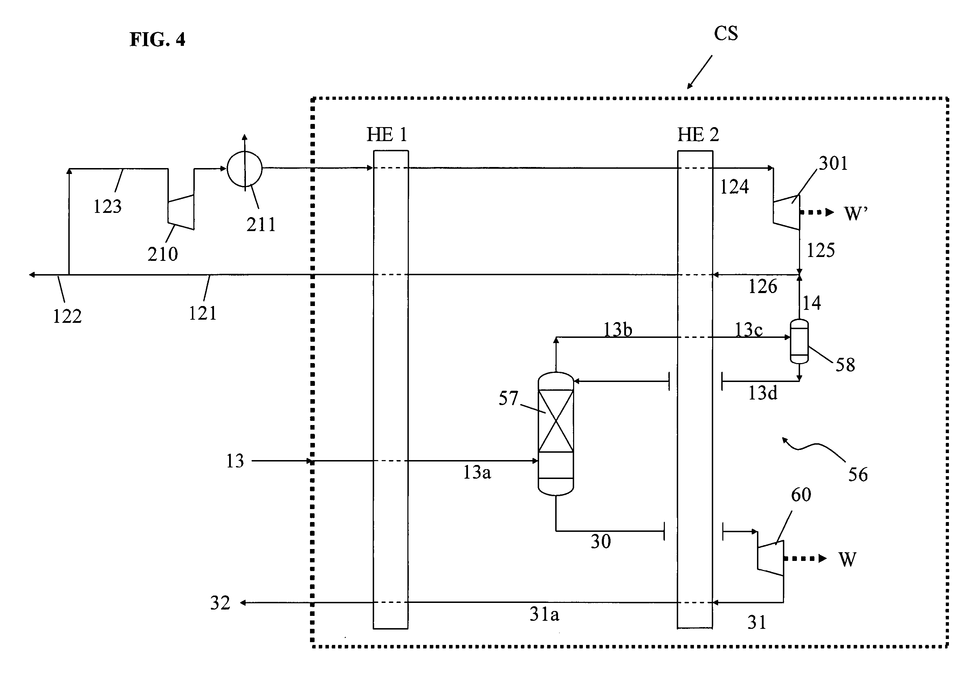

The compressor 200 may not be necessary with a high-pressure front-end delivering the syngas stream 13 at a pressure of around 70-80 bar, acceptable for the ammonia section downstream. In this case, the layout of Fig. 2 is substantially the same, eliminating the compressor 200. Fig. 4 is an example of the layout of Fig. 3 modified to operate with a high-pressure front-end. The main syngas compressor is not necessary; the syngas portion 123 is compressed in a compressor 210, to compensate for pressure loss across the expander 301, and compression heat is recovered in the exchanger 211.

Features of the layouts of Fig. 2 to 4 are equivalent to those of Fig. 1 with the same numerals. In particular, the inlet raw syngas 13 is cooled to 13a and fed to the column 57, obtaining the vapour stream 13b further cooled to 13c in reflux condenser HE2, and sent to separator 58, while nitrogen-rich liquid 30 is reduced in pressure in the turbine 60 and re-heated through condenser HE2 and main exchanger HE1.

The heat balance of exchangers HE1 and HE2 is as follows. In Figs. 1 and 2, HE1 cools down the stream 13 to 13a, while HE2 cools stream 13b to 13c; refrigeration to both HE1 and HE2 is provided by the stream 14a heated to 14b in HE2 and to 20 in HE1 respectively, as well as by heating and possible evaporation of stream 31 to 31a and 32. In the embodiment of Fig. 2, further refrigeration is given by stream 17 discharged by the gas expander 300, which is heated to 17a and 18 through HE2 and HE1. In Fig. 3, the exchangers HE1 and HE2 are also used to cool the gas stream 123, and refrigeration is provided by mixed stream 126 and stream 31 at the outlet of the liquid expander.

It should be noted that the invention provides for additional refrigeration at the coldest point in the process scheme - on the cold side of heat exchanger HE2 - by means of expansion in liquid expander 60 and optionally in gas expander 300 or 301. A significant refrigeration for reflux condenser HE2 is also provided by the reheating of the major part of the product gas (from stream 14a to stream 14b) and by the reheating and at least in part evaporation of stream 31 as it passes through HE2 to become stream 31a. In both the options of Figs. 2 and 3, the enhanced refrigerative effect of liquid stream 30, obtained with the liquid expander 60, will reduce the required flow rate through gas expander 300 or 301.

Alternative arrangements of reflux condenser HE2 are also possible according to the invention. Possible arrangements are presented below.

In a first alternative, the portion 14a of purified syngas stream bypasses the reflux condenser HE2 and is sent directly to the heat exchanger HE1. Refrigeration to the condenser HE2, hence, is provided by stream 17 heated to 17a, and by reheating and partial evaporation of stream 31.

In a second alternative, the stream 31 bypasses the condenser HE2 and is sent to the main exchanger HE1, so that refrigeration of HE2 is provided by stream 14a and stream 17.

In a third alternative, the syngas stream 17 at the outlet of the low-pressure gas expander 300 (Fig. 2) bypasses the condenser HE2.

In a fourth alternative, both syngas stream 14a and liquid stream 31 bypasses the condenser HE2, so that the heat exchange in HE2 is between the purified syngas portion 17 re-heated to 17a, and the raw syngas 13b cooled to 13c.

The invention is also directed to an apparatus for carrying out the above process and to a method for revamping a conventional equipment for the production of ammonia synthesis gas, in such a way to carry out the above process.

The revamping method comprises at least the provision of liquid expander 60 on the nitrogen-rich liquid line, replacing an existing letdown valve, if any.

If the streams 31 and 31 a are sufficient to provide the net refrigeration of the cryo system, i.e. to keep exchangers HE2 and HE1 in heat balance. The revamping may comprise the bypass or removal of an existing gas expander, so obtaining a layout corresponding to Fig. 1.

In further embodiments, the revamping method is aimed to obtain the layout of any of Figs. 2 to 4, by providing the flow line feeding the portion 16 of the purified syngas to the LP gas expander 300, or the line 123 feeding a portion of compressed syngas to the HP gas expander 301. In both cases, the LP or HP gas expander can be a pre-existing gas expander or a new one.

It should be noted that schemes of Figs. 1 to 4 are simplified; accessories and auxiliary items such as valves, pumps, etc... are not shown and will be provided according to known technique.

The invention is also applicable to revamping of existing ammonia plants. An ammonia plant with a conventional cryogenic section for the treatment of raw syngas 13 can be revamped in accordance with any of the schemes of Figs. 1 to 3, providing the expander 60, usually replacing an existing let-down valve, and optionally the gas expander 300 or 301, as well as the respective flow lines. An ammonia plant without cryogenic section for the treatment of the raw syngas 13 can be revamped with the provision of an entirely new cryo section CS in accordance with one of the embodiments of the invention.

The invention is susceptible of application to further syngas production techniques, including to non-standard syngas production such as gas-heated convection reformers. In further embodiments, the primary reformer may not be included in the process.

### EXAMPLE

The following table 1 is an example based on the layout of Fig. 1. The unit is in heat balance with the waste gas (Stream 32) at 1.2 bar, similar to the waste pressure of a PSA unit in an SMR H₂ plant.

**Table 1**

| **Stream** | **13** | **13a** | **13b** | **13c** | **13d** | **14a** | **14b** | **20** | **30** | **31** | **31a** | **32** |
|---|---|---|---|---|---|---|---|---|---|---|---|---|
| Vapour Fraction | 1.000 | 0.944 | 1.000 | 0.911 | 0.000 | 1.000 | 1.000 | 1.000 | 0.000 | 0.178 | 0.733 | 1.000 |
| Pressure (bar) | 23.56 | 23.25 | 23.11 | 23.11 | 23.11 | 23.11 | 23.01 | 22.70 | 23.25 | 1.40 | 1.25 | 1.20 |
| Temperature (C) | 4.4 | -174.8 | -179.0 | -182.1 | -181.9 | -181.9 | -179.4 | 4.2 | -175.2 | -192.2 | -179.4 | 4.2 |
| Comp Mole Frac (H2) | 0.678 | 0.678 | 0.692 | 0.692 | 0.079 | 0.748 | 0.748 | 0.748 | 0.037 | 0.037 | 0.037 | 0.037 |
| Comp Mole Frac (N2) | 0.286 | 0.286 | 0.304 | 0.304 | 0.906 | 0.250 | 0.250 | 0.250 | 0.622 | 0.622 | 0.622 | 0.622 |
| Comp Mole Frac (CH4) | 0.032 | 0.032 | 0.000 | 0.000 | 0.000 | 0.000 | 0.000 | 0.000 | 0.327 | 0.327 | 0.327 | 0.327 |
| Comp Mole Frac (Argon) | 0.003 | 0.003 | 0.003 | 0.003 | 0.015 | 0.002 | 0.002 | 0.002 | 0.015 | 0.015 | 0.015 | 0.015 |
| Molar Flow (kgmole/h) | 14014.6 | 14014.6 | 13788.0 | 13788.0 | 1147.1 | 12640.9 | 12640.9 | 12640.9 | 1373.7 | 1373.7 | 1373.7 | 1373.7 |
| Molecular Weight | 10.03 | 10.03 | 10.05 | 10.05 | 26.13 | 8.59 | 8.59 | 8.59 | 23.33 | 23.33 | 23.33 | 23.33 |
| Mass Flow (kg/h) | 140635 | 140635 | 138570 | 138570 | 29978 | 108592 | 108592 | 108592 | 32044 | 32044 | 32044 | 32044 |

## Claims

1. A process for producing a synthesis gas containing hydrogen and nitrogen, suitable for production of ammonia, comprising the following steps:
■ a raw syngas stream (13) containing H₂, N₂ and impurities is obtained from reforming of a hydrocarbon feedstock;
■ said raw syngas flow (13) is cooled to cryogenic temperature in a cryogenic section (CS) and subject to a purification and HN ratio adjustment process, so obtaining a purified syngas flow comprising H₂ and N₂ in a molar ratio about 3:1, and separating a nitrogen-rich liquid stream (30) from the raw syngas (13);
■ said purified syngas flow is reheated by heat exchange with the cooling raw gas flow and made available at a pressure suitable for ammonia synthesis,
**characterized in that** said nitrogen-rich liquid stream (30) is subject to pressure reduction in a suitable liquid expander (60), recovering a mechanical work (W) from said expansion, and the stream (31) resulting from said expansion is used as a heat exchange medium to provide at least part of net refrigeration of said cryogenic section (CS).

2. A process according to claim 1, wherein said nitrogen-rich liquid stream (30) is at least partly evaporated during said expansion.

3. A process according to claim 1 or 2, wherein the stream (31) resulting from said pressure reduction is used to provide the full refrigeration of said cryogenic section (CS).

4. A process according to any one of claims 1 to 3, wherein after said purification and HN ratio adjustment process, a portion (16) of purified syngas at cryogenic temperature is separated and subject to expansion in a suitable gas expander (300), and the expanded purified syngas stream (17) is used as a heat exchange medium to provide a part of the refrigeration to said cryogenic section (CS).

5. A process according to claim 5, wherein said portion (16) of purified syngas is a minor portion, preferably 15-30% molar flow rate.

6. A process according to any one of claims 1 to 3, wherein a portion (123) of compressed purified syngas delivered by a main syngas compressor (200) is sent back to the cryo section, cooled down to cryogenic temperature, expanded in a suitable gas expander (301) and the output stream (125) of said gas expander (301) is used as a heat exchange medium to provide a part of net refrigeration to said cryo section.

7. A process according to claim 6, wherein said portion (123) of compressed purified syngas is a minor portion of the total flow (130) delivered by said main compressor (200), preferably 10 to 20% molar flow rate.

8. A process according to any one of preceding claims, wherein said liquid expander (60) is a turbine.

9. Apparatus for producing synthesis gas containing hydrogen and nitrogen, suitable for production of ammonia, the apparatus being adapted to carry out a process according to any one of claims 1 to 7.

10. Apparatus according to claim 9, comprising at least:
- a hydrocarbon reforming equipment, and further equipments for shift reaction, CO2 removal, methanation and gas drying, providing a raw syngas stream (13) containing H₂, N₂ and impurities;
- a cryogenic section (CS) for purification and rectification of said raw syngas stream (13), adapted to convert said raw syngas (13) into a purified syngas stream (20) containing H₂ and N₂ in a molar ratio about 3:1, the cryogenic section (CS) comprising at least one heat exchanger (HE1, HE2) for cooling the raw syngas and re-heating the purified syngas;
and **characterized in that** said cryogenic section (CS) comprises a liquid expander (60) disposed to receive a nitrogen-rich liquid stream (30) separated from the raw syngas (13), said liquid expander being adapted to recover a mechanical work (W) from pressure reduction of said nitrogen-rich stream (30), the output (31) of said liquid expander being connected to said at least one heat exchanger (HE1, HE2), to provide at least part of net refrigeration of the cryogenic section (CS).

11. Apparatus according to claim 10, wherein the cryogenic section (CS) comprises a main heat exchanger (HE1), a contacting device (57), a reflux condenser (HE2) and a separator (58) delivering a purified syngas stream (14), and the cryo section (CS) further comprises a low-pressure gas expander (300) disposed to expand a portion (17) of said purified syngas stream (14) from the separator (58), the output of said expander (300) being connected to at least one of said heat exchanger (HE1) and reflux condenser (HE2) to provide a part of the net refrigeration of the cryogenic section (CS).

12. Apparatus according to claim 10, wherein the cryogenic section (CS) comprises a main heat exchanger (HE1), a contacting device (57), a reflux condenser (HE2) and a separator (58) delivering a purified syngas stream (14), and the cryo section (CS) further comprises a high-pressure gas expander (301) disposed to expand a portion (123) of purified syngas stream (131) taken at the delivery side of a main syngas compressor (200) adapted to raise the pressure of the purified syngas to a value suitable for ammonia synthesis, the output of said expander (301) being connected to the output flow line of said separator (58).

13. A method for revamping an equipment for production of ammonia synthesis gas, said equipment comprising a cryogenic section (CS) for purification and HN ratio adjustment of a raw syngas (13), and wherein a nitrogen-rich liquid stream (30) is separated from the raw syngas stream (13), the method comprising at least the step of providing said cryogenic section (CS) with a liquid expander (60) adapted to recover a mechanical work from said nitrogen-rich liquid stream (30), or the substitution of an existing letdown valve with said liquid expander (60).

14. A method according to claim 13, further comprising the provision of a low-pressure expander (300) or a high-pressure expander (301) for a portion of the purified syngas flow.

15. A method for revamping an existing ammonia plant, said plant comprising a front-end for the production of a raw syngas (13) containing hydrogen and nitrogen plus impurities, the method comprising the addition of a new cryogenic section (CS) to said existing ammonia plant for purification and HN ratio adjustment of said raw syngas (13), said new cryogenic section (CS) comprising a liquid expander (60) adapted to recover a mechanical work from a nitrogen-rich liquid stream (30), separated from the raw syngas in said cryogenic section.
